# EUROPEAN PATENT SPECIFICATION

(11) **EP 2 803 970 B1**
(45) Date of publication and mention of the grant of the patent: **02.12.2015**
(21) Application number: 14168442.3
(22) Date of filing: 15.05.2014
(51) Int. Cl.: G01N 3/20, B60C 25/05

(54) **Appliance and method for bending tests on tyre-changing machines**
Vorrichtung und Verfahren zum Durchführen von Biegetests an Reifenwechselmaschinen
Appareil et procédé d`essai de pliage pour machines de service de pneus

(30) Priority: 17.05.2013 IT MO20130136
(43) Date of publication of application: 19.11.2014
(73) Proprietor: Giuliano Group S.p.A., 42015 Correggio (RE) (IT)
(72) Inventor: Bonacini, Maurizio, 42015 Correggio (RE) (IT)
(74) Representative: Brunacci, Marco

(56) References cited:
- EP-A1- 2 319 715
- IT-A1- MI 951 050

## Description

The present invention relates to an appliance and a method for bending tests on tyre-changing machines or the like.

It is known that vehicle wheels generally comprise a metal rim with annular flanges along its perimeter between which are fitted fast up and against the end portions, so-called "beads", of an elastic tyre.

The use is currently known of machines, so-called "tyre-changing machines", able to remove and mount the tyre from/onto its rim for performing, e.g., maintenance, repair or replacement jobs.

Such tyre-changing machines generally consist in a base structure that supports a self-centering spindle for gripping and rotating the wheel rim and in at least a tool-holder arm, movable in height and horizontally due to the action of suitable actuator means and having at least a tool suitable for removing and/or mounting the tyre from and onto the rim.

During use, an operator positions and locks the wheel on the spindle and performs, through a special bead breaking tool, a preliminary phase of detachment of the tyre bead from the rim annular flanges.

Subsequently, the operator adjusts the position of the tool with respect to the frame according to the specific dimensions of the wheel.

Subsequently, the wheel is made to rotate and the tool is used for the removal of the bead above the rim.

The need to manufacture professional tyre-changing machines is known which are able to operate effectively on generally very expensive wheels, e.g. wheels with Run-Flat or UHP tyres, without damaging in any way the rim or the tyre and without jeopardizing their aesthetic aspect. An example of a tyre-changing machine, which avoids damage to the tyre and/or rim by sensing mechanical strain during mounting or demounting operations is known from EP 2319715 A1.

In particular, the structure of the tyre-changing machine and of its tool-holder arm has to be extremely stiff, so as to minimize bending during the tyre removal and mounting steps.

Indeed, an adequately stiff structure of tyre-changing machine allows to keep, even under stress, the tool at the correct distance from the rim edge, thus avoiding any contact with the rim and damage to the rim itself or the tyre.

In particular, the removal/mounting tool can damage the rim when the structure of the tyre-changing machine bends and gives in to the forces mainly generated by the wheel rotation.

Moreover, even in the case of a contact occurring between the tool and the rim, e.g. during the removal operations on rims or tyres particularly difficult to work with, an adequately stiff overall structure of the tyre-changing machine allows to minimize the pressure on the rim by the tool, preserving the rim from damages or scratches.

Consequently, the need is increasingly felt to have tools able to check the actual quality of the tyre-changing machine, meant as the bending response of the whole machine structure to the stresses occurring during the tyre removal/mounting steps.

The main aim of the present invention is to provide a method and an appliance for bending tests on tyre-changing machines or the like which enable to check the bending response of the whole machine structure to the stresses that occur during the operations carried out on a wheel.

Another object of the present invention is to provide an appliance and a method for bending tests on tyre-changing machines or the like which allow to overcome the mentioned drawbacks of the prior art in the ambit of a simple, rational, easy and effective to use as well as low cost solution.

The above mentioned objects are achieved by the present appliance for bending tests on tyre-changing machines or the like, according to claim 1.

The above mentioned objects are also achieved by the present method for bending tests on tyre-changing machines or the like, according to claim 11. Other characteristics and advantages of the present invention will become evident from the description of a preferred but not exclusive embodiment of an appliance and a method for bending tests on tyre-changing machines or the like, illustrated by way of an indicative, but not limitative example in the accompanying drawings in which:
Figure 1 is an axonometric view of the appliance according to the invention fitted on a traditional tyre-changing machine;

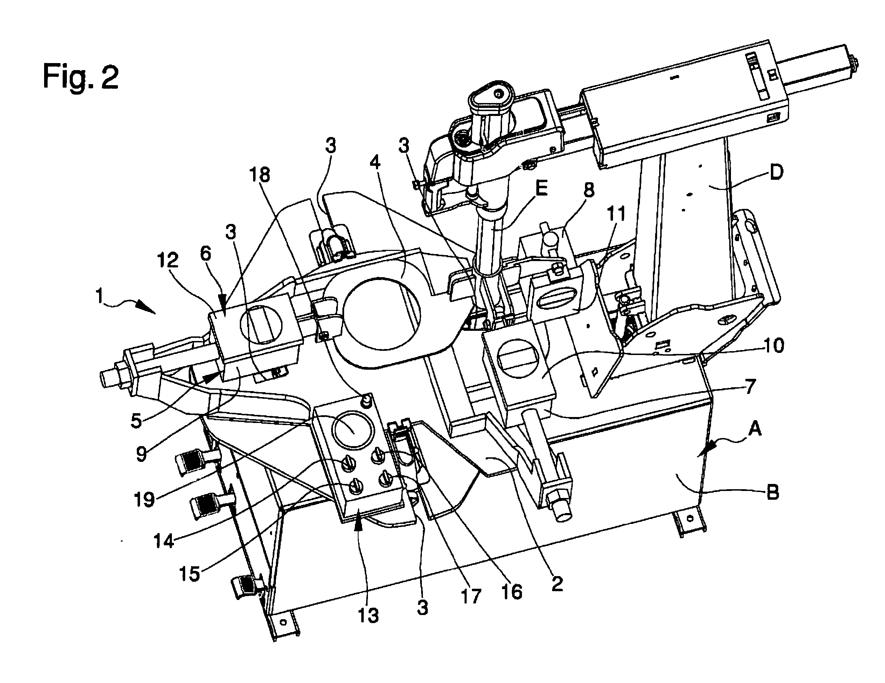

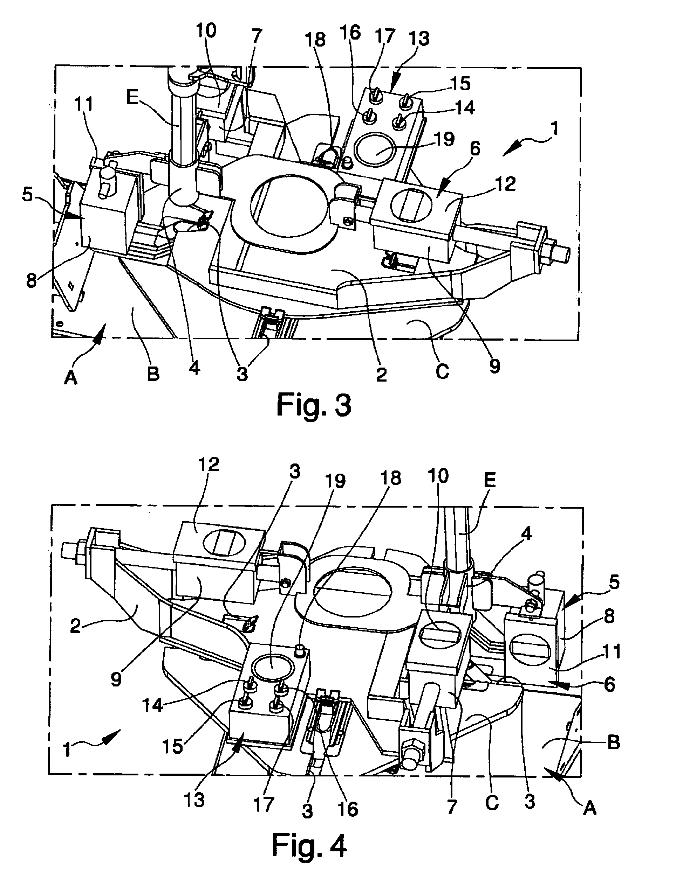

Figures 2, 3 and 4 are axonometric views of the appliance according to the invention;

Figures 5, 6, 7 and 8 are schematic views illustrating the forces applicable to a tyre-changing machine and the relative shifts detectable by means of the appliance and method according to the invention.

With particular reference to these figures, globally indicated by reference numeral 1 is an appliance usable to perform bending tests on tyre-changing machines.

As illustrated by way of example in Figures from 1 to 4, the appliance 1 can be fitted on a traditional tyre-changing machine A.

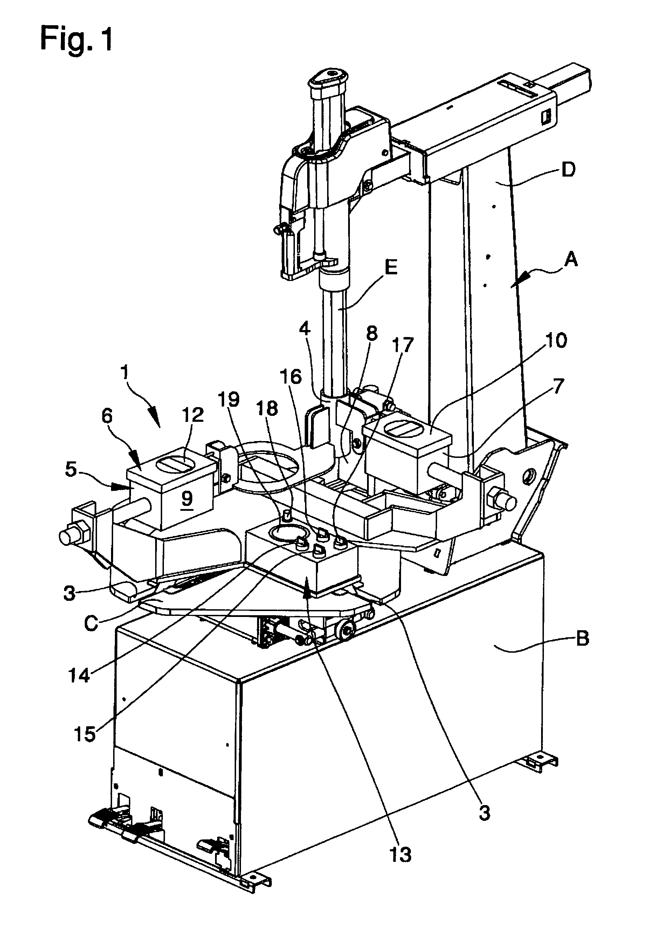

The tyre-changing machine A shown in Figure 1 has a supporting base B, arranged resting on the ground, which supports a self-centering spindle C for gripping and rotating the rim of a wheel.

The machine A also comprises an upright D that extends vertically from the base B and which supports a tool-holder arm E, movable in height and horizontally due to the action of suitable actuator means, not shown.

The lower extremity of the tool-holder arm E is suitable for supporting a tool, not shown in Figure 1, suitable for removing and/or mounting the tyre from and onto the rim.

The application of the appliance 1 to different types of tyre-changing machines or the like, different to tyre-changing machine A shown in figure 1 cannot be ruled out.

The appliance 1 comprises:
- a supporting structure 2;
- first attachment means 3 associable in a removable way with spindle C of the tyre-changing machine A;
- second attachment means 4 associable in a removable way with the tool-holder arm E of the tyre-changing machine A;
- actuator means, generally indicated in the illustrations with reference 5, placed between the supporting structure 2 and the second attachment means 4 and suitable for applying a tangential force Ft and/or an axial force Fv and/or a radial force Fr to the tool-holder arm E;
- bending measuring means, generally indicated in the illustrations with reference 6, placed between the supporting structure 2 and the second attachment means 4 and suitable for measuring a tangential shift St and/or an axial shift Sv and/or a radial shift Sr of the tool-holder arm E with respect to the spindle C.

Advantageously, the appliance 1 allows to simulate the stresses to which the tyre-changing machine A normally undergoes, in particular the tool-holder arm E, during the removal/mounting jobs of a tyre from/onto a rim of a wheel and allows to check the bending response of the whole machine structure.

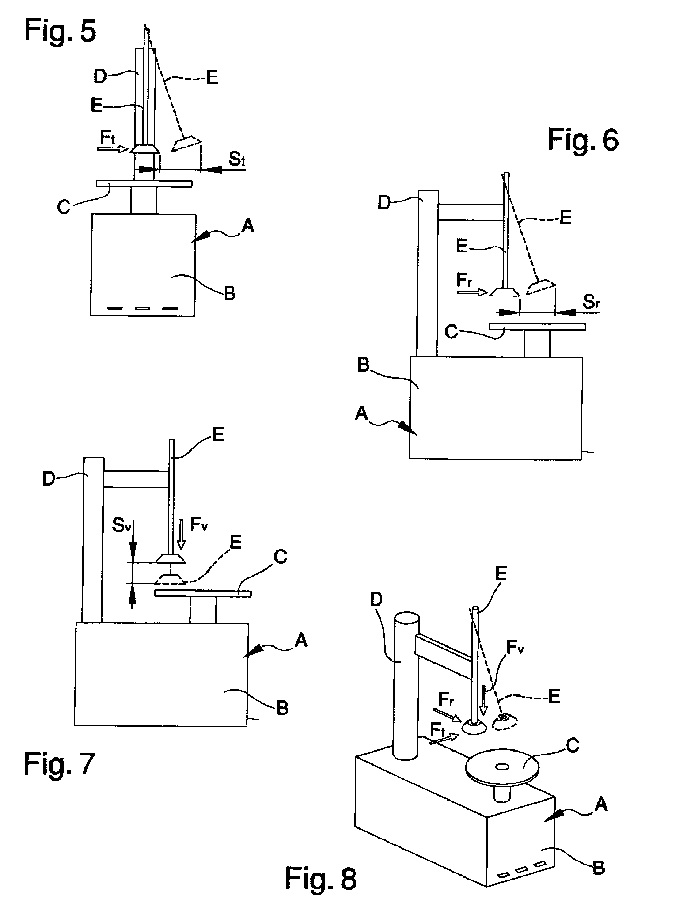

In particular, in Figures 5, 6 and 7 are schematically illustrated the tangential force Ft, the axial force Fv and the radial force Fr respectively, applicable to the tyre-changing machine A by means of the appliance 1.

In Figures 5, 6 and 7 are also schematically illustrated the tangential shift St, the axial shift Sv and the radial shift Sr detectable by means of the appliance 1 after the application of the above forces.

Preferably, the actuator means 5 are suitable for simultaneously applying the tangential force Ft, the axial force Fv and the radial force Fr to the tool-holder arm E.

In this way all the forces acting on the whole structure of the tyre-changing machine A are simultaneously simulated during conventional removal/mounting jobs.

In Figure 8 the simultaneous application is schematically illustrated of all three forces to the tyre-changing machine A and the relative shift of the tool-holder arm E.

With reference to the particular embodiment of the appliance 1 shown in the figures, the actuator means 5 comprise:
- a first actuator 7 suitable for applying the tangential force Ft to the tool-holder arm E;
- a second actuator 8 suitable for applying the axial force Fv to the tool-holder arm E;
- a third actuator 9 suitable for applying the radial force Fr to the tool-holder arm E.

Preferably, the first actuator 7, the second actuator 8 and the third actuator 9 are made up of respective fluid-operated linear actuators.

Furthermore, as shown in the illustrations, the second attachment means 4 can be made by means of a suitable tubular element which can be fitted on a portion of the tool-holder arm, having appropriate flanges associated with respective mobile stems of the first, second and third actuators 7, 8 and 9.

Different embodiments of the second attachment means 4 cannot however be ruled out.

Different embodiments of the actuator means 5 cannot however be ruled out, wherein e.g. each of the forces is generated by several actuators suitably connected to one another.

Again with reference to the particular embodiment of the appliance 1 illustrated in the figures, the bending measuring means 6 comprise:
- a first measuring device 10 suitable for measuring the tangential shift St;
- a second measuring device 11 suitable for measuring the axial shift Sv;
- and at least a third measuring device 12 suitable for measuring the radial shift Sr.

Preferably, the first measuring device 10, the second measuring device 11 and the third measuring device 12 are made up of respective digital comparators for the measurement of the linear shift.

The first measuring device 10, the second measuring device 11 and the third measuring device 12 are fixed to the first actuator 7, to the second actuator 8 and to the third actuator 9 respectively and have corresponding feelers engaged in correspondence of respective portions of the second attachment means 4. The realization of bending measuring means 6 by means of different measuring devices arranged differently cannot be ruled out.

Preferably, the supporting structure 2 is made up of a supporting plate and the first attachment means 3 are made up of two pairs of profiled elements of the plate itself, substantially opposite to one another and suitable for housing in contact respective stop elements F of the spindle C.

In particular, with reference to the tyre-changing machine A and to the particular spindle C illustrated by way of example in the figures, the stop elements F are made up of two pairs of movable jaws, suitable for engaging in correspondence of the profiled elements 3 for locking the plate 2.

Preferably, the two pairs of profiled elements 3 can be made in correspondence of opposite sections of the outer edge of the plate itself and/or within slots formed on the plate itself.

Usefully, the attachment means 3 of the appliance 1 may comprise a through hole, made in correspondence of a substantially central portion of the plate 2, and suitable for allowing the insertion of a conventional pin with centering cone, for locking the plate itself on the spindle C.

The appliance 1 comprises control means 13 for activating/deactivating the actuator means 5.

In particular, with reference to the preferred embodiment shown in the illustrations, the control means 13 comprise a first switch 14 suitable for activating/deactivating the first actuator 7, a second switch 15 suitable for activating/deactivating the second actuator 8 and a third switch 16 suitable for activating/deactivating the third actuator 9.

The control means 13 also comprise at least a general switch 17 suitable for activating/deactivating simultaneously the first actuator 7, the second actuator 8 and the third actuator 9.

Usefully, the control means 13 comprise adjustment means suitable for adjusting the intensity of the tangential force Ft, the axial force Fv and the radial force Fr.

In particular, with reference to the preferred embodiment illustrated in the figures, the adjustment means are made up of an adjustment knob 18 and an indicator 19 of the intensity of the force applied.

The method according to the invention is described below.

The method comprises the following steps:
- arranging the actuator means 5 between the spindle C and the tool-holder arm E;
- by means of the actuator means 5, applying on the tool-holder arm E a tangential force Ft and/or an axial force Fv and/or a radial force Fr by means of the first actuator 7, the second actuator 8 and the third actuator 9, respectively;
- arranging the bending measuring means 6 between the spindle C and the tool-holder arm E;
- by means of the bending measuring means 6, measuring a tangential shift St and/or an axial shift Sv and/or a radial shift Sr of the tool-holder arm E with respect to the grip and rotation means, by means of the first measuring device 10, the second measuring device 11 and the third measuring device 12, respectively.

Preferably, the method involves applying the tangential force Ft, the axial force Fv and the radial force Fr simultaneously on the tool-holder arm E.

Usefully, the method according to the invention may also comprise adjusting the intensity of the tangential force Ft, of the axial force Fv and/or of the radial force Fr, by means of the adjustment means 18.

It has in practice been found how the described invention achieves the proposed objects.

In particular the fact is underlined that the appliance according to the invention allows to accurately check the bending response of the whole structure of a tyre-changing machine, as a result of the stresses which occur during the conventional removal/mounting jobs of a wheel tyre.

## Claims

1. Appliance (1) for bending tests on tyre-changing machines or the like, **characterized in that** it comprises:
- a supporting structure (2);
- first attachment means (3) associable in a removable way with grip and rotation means (C) for gripping and rotating a rim of a wheel of a tyre-changing machine (A) or the like;
- second attachment means (4) associable in a removable way with at least a tool-holder arm (E) of said tyre-changing machine (A);
- actuator means (5) placed between said supporting structure (2) and said second attachment means (4) and suitable for applying to said tool-holder arm (E) a tangential force (Ft) and/or an axial force (Fv) and/or a radial force (Fr);
- bending measuring means (6) placed between said supporting structure (2) and said second attachment means (4) and suitable for measuring a tangential shift (St) and/or an axial shift (Sv) and/or a radial shift (Sr) of said tool-holder arm (E) with respect to said grip and rotation means (C).

2. Appliance (1) according to claim 1, **characterized in that** said actuator means (5) are suitable for simultaneously applying said tangential force (Ft), said axial force (Fv) and said radial force (Fr) to said tool-holder arm (E).

3. Appliance (1) according to one or more of the preceding claims, **characterized in that** said actuator means (5) comprise at least a first actuator (7) suitable for applying to said tool-holder arm (E) said tangential force (Ft), at least a second actuator (8) suitable for applying to said tool-holder arm (E) said axial force (Fv) and at least a third actuator (9) suitable for applying to said tool-holder arm (E) said radial force (Fr).

4. Appliance (1) according to one or more of the preceding claims, **characterized in that** said bending measuring means (6) comprise at least a first measuring device (10) of the tangential shift (St), at least a second measuring device (11) of the axial shift (Sv) and at least a third measuring device (12) of the radial shift (Sr).

5. Appliance (1) according to claim 4, **characterized in that** at least one of said first measuring device (10), said second measuring device (11) and said third measuring device (12) is made up of a comparator for the measurement of the linear shift or a similar device.

6. Appliance (1) according to one or more of the preceding claims, **characterized in that** said first attachment means (3) comprise at least two profiled elements (3) made on said supporting structure (2), substantially opposite to one another and suitable for housing in contact respective stop elements for stopping said grip and rotation means (C), for the grip of said supporting structure (2) by means of said stop elements and the locking on said grip and rotation means (C).

7. Appliance (1) according to one or more of the preceding claims, **characterized in that** said first attachment means (3) comprise at least a through hole (3) made on said passage structure and suitable for allowing the insertion of a conventional pin with centering cone, for the locking of said supporting structure (2) on said grip and rotation means (C).

8. Appliance (1) according to one or more of the preceding claims, **characterized in that** it comprises control means (13) suitable for activating/deactivating said actuator means (5).

9. Appliance (1) according to claim 8, **characterized in that** said control means (13) comprise at least a first switch (14) suitable for activating/deactivating said first actuator (7), at least a second switch (15) suitable for activating/deactivating said second actuator (8) and at least a third switch (16) suitable for activating/deactivating said third actuator (9).

10. Appliance (1) according to one or more of the preceding claims, **characterized in that** said control means (13) comprise adjustment means (18, 19) suitable for adjusting the intensity of at least one of said tangential force (Ft), said axial force (Fv) and said radial force (Fr).

11. Method for bending tests on tyre-changing machines or the like, **characterized in that** it comprises the following steps:
- arranging actuator means (5) between the grip and rotation means (C) of the rim of a wheel and at least a tool-holder arm (E) in a tyre-changing machine (A) or the like;
- by means of said actuator means (5), applying to said tool-holder arm (E) a tangential force (Ft) and/or an axial force (Fv) and/or a radial force (Fr);
- arranging bending measuring means (6) between said grip and rotation means (C) and said tool-holder arm (E);
- by means of said bending measuring means (6), measuring a tangential shift (St) and/or an axial shift (Sv) and/or a radial shift (Sr) of said tool-holder arm (E) with respect to said grip and rotation means (C).

12. Method according to claim 11, **characterized in that** said step of applying comprises applying simultaneously said tangential force (Ft), said axial force (Fv) and said radial force (Fr) to said tool-holder arm (E).

13. Method according to one or more of the claims 11 and 12, **characterized in that** said actuator means (5) comprise at least a first actuator (7), a second actuator (8) and a third actuator (9) and said step of applying comprises applying said tangential force (Ft) by means of said first actuator (7), said axial force (Fv) by means of said second actuator (8) and said radial force (Fr) by means of said third actuator (9).

14. Method according to one or more of the claims from 11 to 13, **characterized in that** said bending measuring means (6) comprise at least a first measuring device (10), a second measuring device (11) and a third measuring device (12), and said step of measuring comprises measuring said tangential shift (St) by means of said first measuring device (10), said axial shift (Sv) by means of said second measuring device (11) and said radial shift (Sr) by means of said third measuring device (12).

15. Method according to one or more of the claims from 11 to 14, **characterized in that** it comprises the step of adjusting the intensity of at least one of said tangential force (Ft), said axial force (Fv) and said radial force (Fr).

## Patentansprüche

1. Vorrichtung (1) für Biegetests an Reifenwechselmaschinen oder dergleichen, **dadurch gekennzeichnet, dass** sie umfasst:
- eine Stützkonstruktion (2);
- erste Anbringungsmittel (3), die abnehmbar mit Greif- und Drehmitteln (C) zum Greifen und Drehen einer Felge eines Rades einer Reifenwechselmaschine (A) oder dergleichen verbunden werden können;
- zweite Anbringungsmittel (4), die abnehmbar mit mindestens einem Werkzeughalterarm (E) der Reifenwechselmaschine (A) verbunden werden können;
- Aktormittel (5), die zwischen der Stützkonstruktion (2) und den zweiten Anbringungsmitteln (4) angeordnet sind und zum Aufbringen einer Tangentialkraft (Ft) und/oder einer Axialkraft (Fv) und/oder einer Radialkraft (Fr) auf den Werkzeughalterarm (E) geeignet sind;
- Biegemessmittel (6), die zwischen der Stützkonstruktion (2) und den zweiten Anbringungsmitteln (4) angeordnet sind und zum Messen einer tangentialen Verschiebung (St) und/oder einer axialen Verschiebung (Sv) und/oder einer radialen Verschiebung (Sr) des Werkzeughalterarms (E) in Bezug zu den Greif- und Drehmitteln (C) geeignet sind.

2. Vorrichtung (1) nach Anspruch 1, **dadurch gekennzeichnet, dass** die Aktormittel (5) zum gleichzeitigen Aufbringen der Tangentialkraft (Ft), der Axialkraft (Fv) und der Radialkraft (Fr) auf den Werkzeughalterarm (E) geeignet sind.

3. Vorrichtung (1) nach einem oder mehreren der vorhergehenden Ansprüche, **dadurch gekennzeichnet, dass** die Aktormittel (5) mindestens einen ersten Aktor (7), der zum Aufbringen der Tangentialkraft (Ft) auf den Werkzeughalterarm (E) geeignet ist, mindestens einen zweiten Aktor (8), der zum Aufbringen der Axialkraft (Fv) auf den Werkzeughalterarm (E) geeignet ist, und mindestens einen dritten Aktor (9) umfassen, der zum Aufbringen der Radialkraft (Fr) auf den Werkzeughalterarm (E) geeignet ist.

4. Vorrichtung (1) nach einem oder mehreren der vorhergehenden Ansprüche, **dadurch gekennzeichnet, dass** die Biegemessmittel (6) mindestens ein erstes Gerät (10) zum Messen der tangentialen Verschiebung (St), mindestens ein zweites Gerät (11) zum Messen der axialen Verschiebung (Sv) und mindestens ein drittes Gerät (12) zum Messen der radialen Verschiebung (Sr) umfassen.

5. Vorrichtung (1) nach Anspruch 4, **dadurch gekennzeichnet, dass** mindestens eines von dem ersten Messgerät (10), dem zweiten Messgerät (11) und dem dritten Messgerät (12) einen Komparator für die Messung der linearen Verschiebung oder ein ähnliches Gerät umfasst.

6. Vorrichtung (1) nach einem oder mehreren der vorhergehenden Ansprüche, **dadurch gekennzeichnet, dass** die ersten Anbringungsmittel (3) mindestens zwei profilierte Elemente (3) umfassen, die auf der Stützkonstruktion (2) hergestellt sind, einander im Wesentlichen entgegengesetzt sind und geeignet sind, um in Berührung entsprechende Stopperelemente zum Stoppen der Greif- und Drehmittel (C) unterzubringen, zum Greifen der Stützkonstruktion (2) mittels der Stopperelemente und Verriegeln auf den Greif- und Drehmitteln (C).

7. Vorrichtung (1) nach einem oder mehreren der vorhergehenden Ansprüche, **dadurch gekennzeichnet, dass** die ersten Anbringungsmittel (3) mindestens ein Durchgangsloch (3) umfassen, das auf der Durchgangsstruktur hergestellt ist und geeignet ist, um das Einführen eines herkömmlichen Stiftes mit Zentrierkegel zum Verriegeln der Stützkonstruktion (2) auf den Greif- und Drehmitteln (C) zuzulassen.

8. Vorrichtung (1) nach einem oder mehreren der vorhergehenden Ansprüche, **dadurch gekennzeichnet, dass** sie Steuerungsmittel (13) umfasst, die sich zum Aktivieren/Deaktivieren der Aktormittel (5) eignen.

9. Vorrichtung (1) nach Anspruch 8, **dadurch gekennzeichnet, dass** die Steuerungsmittel (13) mindestens einen ersten Schalter (14), der geeignet ist, um den ersten Aktor (7) zu aktivieren/deaktivieren, mindestens einen zweiten Schalter (15), der geeignet ist, um den zweiten Aktor (8) zu aktivieren/deaktivieren, und mindestens einen dritten Schalter (16) umfassen, der geeignet ist, um den dritten Aktor (9) zu aktivieren/deaktivieren.

10. Vorrichtung (1) nach einem oder mehreren der vorhergehenden Ansprüche, **dadurch gekennzeichnet, dass** die Steuerungsmittel (13) Einstellungsmittel (18, 19) umfassen, die geeignet sind, um die Stärke von mindestens einem von der Tangentialkraft (Ft), der Axialkraft (Fv) und der Radialkraft (Fr) einzustellen.

11. Verfahren für Biegetests auf Reifenwechselmaschinen oder dergleichen, **dadurch gekennzeichnet, dass** es die folgenden Schritte umfasst:
- Anordnen von Aktormitteln (5) zwischen den Greif- und Drehmitteln (C) der Felge eines Rades und mindestens einem Werkzeughalterarm (E) in einer Reifenwechselmaschine (A) oder dergleichen;
- Aufbringen einer Tangentialkraft (Ft) und/oder einer Axialkraft (Fv) und/oder einer Radialkraft (Fr) auf den Werkzeughalterarm (E) mittels der Aktormittel (5);
- Anordnen von Biegemessmitteln (6) zwischen den Greif- und Drehmitteln (C) und dem Werkzeughalterarm (E);
- Messen einer tangentialen Verschiebung (St) und/oder einer axialen Verschiebung (Sv) und/oder einer radialen Verschiebung (Sr) des Werkzeughalterarms (E) in Bezug auf die Greif- und Drehmittel (C) mittels der Biegemessmittel (6).

12. Verfahren nach Anspruch 11, **dadurch gekennzeichnet, dass** der Schritt des Aufbringens das gleichzeitige Aufbringen der Tangentialkraft (Ft), der Axialkraft (Fv) und der Radialkraft (Fr) auf den Werkzeughalterarm (E) umfasst.

13. Verfahren nach einem oder mehreren der Ansprüche 11 und 12, **dadurch gekennzeichnet, dass** die Aktormittel (5) mindestens einen ersten Aktor (7), einen zweiten Aktor (8) und einen dritten Aktor (9) umfassen und der Schritt des Aufbringens das Aufbringen der Tangentialkraft (Ft) mittels des ersten Aktors (7), der Axialkraft (Fv) mittels des zweiten Aktors (8) und der Radialkraft (Fr) mittels des dritten Aktors (9) umfasst.

14. Verfahren nach einem oder mehreren der Ansprüche 11 bis 13, **dadurch gekennzeichnet, dass** die Biegemessmittel (6) mindestens ein erstes Messgerät (10), ein zweites Messgerät (11) und ein drittes Messgerät (12) umfassen und der Schritt des Messens das Messen der tangentialen Verschiebung (St) mittels des ersten Messgeräts (10), der axialen Verschiebung (Sv) mittels des zweiten Messgeräts (11) und der radialen Verschiebung (Sr) mittels des dritten Messgeräts (12) umfasst.

15. Verfahren nach einem oder mehreren der Ansprüche 11 bis 14, **dadurch gekennzeichnet, dass** es den Schritt des Anpassens der Stärke von mindestens einem von der Tangentialkraft (Ft), der Axialkraft (Fv) und der Radialkraft (Fr) umfasst.

## Revendications

1. Appareil (1) d'essais de pliage sur des machines démonte-pneus ou similaires, **caractérisé en ce qu'**il comprend :
- une structure de support (2) ;
- des premiers moyens de fixation (3) pouvant être associés de manière amovible à des moyens de préhension et de rotation (C) pour agripper et faire tourner une jante d'une roue d'une machine démonte-pneus (A) ou similaire ;
- des deuxièmes moyens de fixation (4) pouvant être associés de manière amovible à au moins un bras (E) porte-outils de ladite machine démonte-pneus (A) ;
- des moyens d'actionnement (5) placés entre ladite structure de support (2) et lesdits deuxièmes moyens de fixation (4) et aptes à appliquer audit bras (E) porte-outils une force tangentielle (Ft) et/ou une force axiale (Fv) et/ou une force radiale (Fr) ;
- des moyens de mesure de pliage (6) placés entre ladite structure de support (2) et lesdits deuxièmes moyens de fixation (4) et aptes à mesurer un décalage tangentiel (St) et/ou un décalage axial (Sv) et/ou un décalage radial (Sr) dudit bras (E) porte-outils par rapport auxdits moyens de préhension et de rotation (C).

2. Appareil (1) selon la revendication 1, **caractérisé en ce que** lesdits moyens d'actionnement (5) sont aptes à appliquer simultanément ladite force tangentielle (Ft), ladite force axiale (Fv) et ladite force radiale (Fr) audit bras (E) porte-outils.

3. Appareil (1) selon une ou plusieurs des revendications précédentes, **caractérisé en ce que** lesdits moyens d'actionnement (5) comprennent au moins un premier actionneur (7) apte à appliquer audit bras (E) porte-outils ladite force tangentielle (Ft), au moins un deuxième actionneur (8) apte à appliquer audit bras (E) porte-outils ladite force axiale (Fv) et au moins un troisième actionneur (9) apte à appliquer audit bras (E) porte-outils ladite force radiale (Fr).

4. Appareil (1) selon une ou plusieurs des revendications précédentes, **caractérisé en ce que** lesdits moyens de mesure de pliage (6) comprennent au moins un premier dispositif (10) de mesure du décalage tangentiel (St), au moins un deuxième dispositif (11) de mesure du décalage axial (Sv) et au moins un troisième dispositif (12) de mesure du décalage radial (Sr).

5. Appareil (1) selon la revendication 4, **caractérisé en ce qu'**au moins l'un parmi ledit premier dispositif de mesure (10), ledit deuxième dispositif de mesure (11) et ledit troisième dispositif de mesure (12) est constitué d'un comparateur pour la mesure du décalage linéaire ou d'un dispositif similaire.

6. Appareil (1) selon une ou plusieurs des revendications précédentes, **caractérisé en ce que** lesdits premiers moyens de fixation (3) comprennent au moins deux éléments profilés (3) constitués sur ladite structure de support (2), disposés sensiblement à l'opposé l'un de l'autre et aptes à loger des éléments d'arrêt respectifs en contact pour immobiliser lesdits moyens de préhension et de rotation (C), en vue de la préhension de ladite structure de support (2) au moyen desdits éléments d'arrêt et du verrouillage sur lesdits moyens de préhension et de rotation (C).

7. Appareil (1) selon une ou plusieurs des revendications précédentes, **caractérisé en ce que** lesdits premiers moyens de fixation (3) comprennent au moins un orifice traversant (3) constitué sur ladite structure de passage et apte à permettre l'insertion d'une goupille de type classique avec cône de centrage, en vue du verrouillage de ladite structure de support (2) sur lesdits moyens de préhension et de rotation (C).

8. Appareil (1) selon une ou plusieurs des revendications précédentes, **caractérisé en ce qu'**il comprend des moyens de commande (13) aptes à activer/désactiver lesdits moyens d'actionnement (5).

9. Appareil (1) selon la revendication 8, **caractérisé en ce que** lesdits moyens de commande (13) comprennent au moins un premier commutateur (14) apte à activer/désactiver ledit premier actionneur (7), au moins un deuxième commutateur (15) apte à activer/désactiver ledit deuxième actionneur (8) et au moins un troisième commutateur (16) apte à activer/désactiver ledit troisième actionneur (9).

10. Appareil (1) selon une ou plusieurs des revendications précédentes, **caractérisé en ce que** lesdits moyens de commande (13) comprennent des moyens d'ajustement (18, 19) aptes à ajuster l'intensité d'au moins l'une parmi ladite force tangentielle (Ft), ladite force axiale (Fv) et ladite force radiale (Fr).

11. Procédé d'essais de pliage sur des machines démonte-pneus ou similaires, **caractérisé en ce qu'**il comprend les opérations suivantes consistant à :
- disposer des moyens d'actionnement (5) entre les moyens de préhension et de rotation (C) de la jante d'une roue et au moins un bras (E) porte-outils dans une machine démonte-pneus (A) ou similaire ;
- au moyen desdits moyens d'actionnement (5), appliquer audit bras (E) porte-outils une force tangentielle (Ft) et/ou une force axiale (Fv) et/ou une force radiale (Fr) ;
- disposer des moyens de mesure de pliage (6) entre lesdits moyens de préhension et de rotation (C) et ledit bras (E) porte-outils ;
- au moyen desdits moyens de mesure de pliage (6), mesurer un décalage tangentiel (St) et/ou un décalage axial (Sv) et/ou un décalage radial (Sr) dudit bras (E) de porte-outils par rapport auxdits moyens de préhension et de rotation (C).

12. Procédé selon la revendication 11, **caractérisé en ce que** ladite étape d'application comprend l'application simultanée de ladite force tangentielle (Ft), de ladite force axiale (Fv) et de ladite force radiale (Fr) audit bras (E) de porte-outils.

13. Procédé selon une ou plusieurs des revendications 11 et 12, **caractérisé en ce que** lesdits moyens d'actionnement (5) comprennent au moins un premier actionneur (7), un deuxième actionneur (8) et un troisième actionneur (9), et ladite étape d'application comprend l'application de ladite force tangentielle (Ft) au moyen dudit premier actionneur (7), de ladite force axiale (Fv) au moyen dudit deuxième actionneur (8) et de ladite force radiale (Fr) au moyen dudit troisième actionneur (9).

14. Procédé selon une ou plusieurs des revendications 11 à 13, **caractérisé en ce que** lesdits moyens de mesure de pliage (6) comprennent au moins un premier dispositif de mesure (10), un deuxième dispositif de mesure (11) et un troisième dispositif de mesure (12), et **en ce que** ladite étape de mesure comprend la mesure dudit décalage tangentiel (St) au moyen dudit premier dispositif de mesure (10), dudit décalage axial (Sv) au moyen dudit deuxième dispositif de mesure (11) et dudit décalage radial (Sr) au moyen dudit troisième dispositif de mesure (12).

15. Procédé selon une ou plusieurs des revendications 11 à 14, **caractérisé en ce qu'**il comprend l'étape consistant à ajuster l'intensité d'au moins l'une parmi ladite force tangentielle (Ft), ladite force axiale (Fv) et ladite force radiale (Fr).
